(19) Europäisches Patentamt
European Patent Office
Office européen des brevets

(11) **EP 3 435 117 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **18182742.9**

(22) Anmeldetag: **10.07.2018**

(51) Int Cl.:
*G01S 17/42* (2006.01)     *G01S 7/497* (2006.01)

(54) **SENSOR UND VERFAHREN ZUR ERFASSUNG UND ABSTANDSBESTIMMUNG VON OBJEKTEN**

SENSOR AND METHOD FOR DETECTING AND DETERMINING THE DISTANCE BETWEEN OBJECTS

CAPTEUR ET PROCÉDÉ DE DÉTECTION ET DE DÉTERMINATION DES DISTANCES ENTRE DES OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2017 DE 102017117162**

(43) Veröffentlichungstag der Anmeldung:
**30.01.2019 Patentblatt 2019/05**

(73) Patentinhaber: **Sick AG**
**79183 Waldkirch (DE)**

(72) Erfinder:
• **Engler, Michael**
**79350 Sexau (DE)**
• **Hammes, Markus**
**79117 Freiburg (DE)**

(56) Entgegenhaltungen:
**EP-A1- 2 541 273        EP-A2- 1 302 784**
**DE-B3-102011 053 212**

**Beschreibung**

Die Erfindung betrifft einen Sensor, insbesondere Laserscanner, und ein Verfahren zur Erfassung und Abstandsbestimmung von Objekten nach dem Oberbegriff von Anspruch 1 beziehungsweise 13.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner bewegt wird.

Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Bei einem Einsatz im Außenbereich (Outdoor) stellen die Umwelteinflüsse, insbesondere Nebel, Regen und Schnee, besondere Herausforderungen für die Zuverlässigkeit und den störungsfreien Betrieb dar. Sicherheitslaserscanner müssen aufgrund der hohen Detektionsanforderungen sehr empfindlich sein. Das Auftreten von Regentropfen, Schneeflocken oder feinen Nebeltröpfchen im Strahlengang führt daher mit großer Wahrscheinlichkeit zur Detektion dieser für die Sicherheitsfunktion irrelevanten Objekte. Somit ergibt sich aufgrund der sicherheitsgerichteten Reaktion des Systems zwar nicht zwingend eine Gefährdung, aber im Normalfall eine reduzierte Verfügbarkeit und somit bei wiederholtem Auftreten eine erhebliche Behinderung des produktiven Betriebs.

Im Fall von Nebel gibt es nicht nur direkte Detektion von Nebeltröpfchen als Partikel, sondern auch die Möglichkeit einer gefahrbringenden Dämpfung des Messsignals, weil Sendelicht beziehungsweise remittiertes Empfangslicht auf dem Weg von Laserscanner zu Objekt und zurück durch Streuung an Nebeltröpfchen verloren geht. Die Dämpfung des Signals in Abhängigkeit von der Nebeldichte und vom Messabstand wird durch die erweiterte LIDAR-Gleichung beschrieben:

$$P(r,\lambda) = P_0 \frac{c\tau}{2} A\eta \frac{O(r)}{r^2} \beta(r,\lambda) exp\left[-2\int_0^r \alpha(r,\lambda)dr\right].$$

Dabei soll gar nicht auf alle einzelnen Terme genauer eingegangen werden. Der Abstandsverlauf des Empfangssignals $P(r,\lambda)$ wird wesentlich durch das geometrische Abstandsgesetz $\frac{O(r)}{r^2}$, das unabhängig von Umwelteinflüssen einen quadratischen Abfall der empfangenen Lichtleistung mit dem Messabstand beschreibt, und durch die Nebeldämpfung im Transmissionsterm $exp\left[-2\int_0^r \alpha(r,\lambda)dr\right]$ mit Nebeldichte $\alpha$ bestimmt. Es ergibt sich also bei homogenem Nebel gemäß dem Lambert-Beerschen Gesetz eine exponentielle Dämpfung mit der zurückgelegten Wegstrecke. Ab einer bestimmten, systemabhängigen Grenze zunehmender Nebeldichte $\alpha$ wird die Dämpfung zu stark und führt zum Verlust der Detektion eines Objekts. Aus der sehr starken Abstandsabhängigkeit des Empfangssignals ergibt sich, dass das Signal in unmittelbarer Nähe zum Laserscanner praktisch unbeeinträchtigt vom Nebel bleibt, während derselbe Nebel die Detektion eines weit entfernten Objekts unmöglich machen kann.

Laserscanner für reine Automatisierungs- und Messaufgaben können Nebeleffekte weitestgehend dadurch ausblenden, dass ihre Empfindlichkeit so weit reduziert wird, dass Nebel nur in Extremfällen sehr hoher Dichte störend wird. Selbst dann gibt es allenfalls einen Ausfall von nutzbaren Messdaten, jedoch keine sicherheitsrelevante Detektion, so dass keine weiteren Maßnahmen zur Beherrschung von Nebeldämpfung vorgesehen werden müssen.

Dagegen gibt es bisher keine befriedigenden Konzepte für Sicherheitslaserscanner im Außenbereich. Herkömmliche Sicherheitslaserscanner sind vielmehr weit überwiegend im Innenbereich eingesetzt, wo sich das Problem des Detektionsverlustes aufgrund von Umwelteinflüssen ignorieren lässt. Der Betrieb unter Einfluss von Regen und Nebel ist hier im Sicherheitskonzept ausgeschlossen.

Dämpfende Einflüsse im Strahlengang eines Sicherheitslaserscanners können grundsätzlich durch das Vorhalten von Signalreserven beherrscht werden. Diese Maßnahme geht jedoch zu Lasten der Nominalreichweite des Systems. Außerdem wird das Problem so nur verschoben und nicht gelöst, denn es müsste immer noch von außen sichergestellt sein, dass die Umwelteinflüsse nicht stärker werden als die Signalreserven bei der reduzierten Nominalreichweite.

Es ist auch denkbar, die Sichtweite in Nebel über die Transmission oder die Rückstreuung zu messen. Eine detaillierte Analyse der Signalhöhe des Empfangssignals ist erforderlich, die mit erheblichem zusätzlichem Aufwand verbunden ist. Schließlich können die Einflüsse von Niederschlag auf die Robustheit durch Filteralgorithmen reduziert werden. Vorhandene Filteralgorithmen sind aber nicht sicherheitstechnisch qualifiziert, und sie wirken zwar bei moderaten Einflüssen gut, zeigen aber Einschränkungen gerade bei sehr starkem Niederschlag.

In der DE 10 2009 057 104 A1 unterscheidet ein Laserscanner aufgrund der Form der Empfangspulse, ob ein Objekt oder nur ein Störer als sogenanntes weiches Ziel angetastet wurde. Obwohl das eine hilfreiche Information ist, lässt sich daran nicht entscheiden, ob der Laserscanner noch detektionsfähig ist, sich also beispielsweise weitere relevante Ziele im Nebel verbergen. Zudem muss das Empfangssignal abgetastet werden, um es untersuchen zu können, was einen erheblichen Mehraufwand darstellt.

Aus der EP 1 302 784 A2 ist eine Sichtweitenbestimmung für einen an einem Fahrzeug angebrachten Laserscanner bekannt. Dabei wird davon ausgegangen, dass homogener Nebel wie eine stationäre Wand detektiert wird. Das erscheint als Ausgangspunkt für eine zuverlässige Erkennung der eigenen Detektionsfähigkeit problematisch.

Nach der DE 10 2012 112 987 B3 wird ein und dasselbe Empfangssignal ausgewertet, um zugleich einen Abstand und ein Sichttrübungsmaß zu bestimmen. Die Sichttrübung aber schon aus einer einzelnen Messung zu bewerten, ist sicherheitstechnisch bedenklich, und wie schon erwähnt ist die aufwändige Abtastung des Empfangssignals erforderlich.

In der EP 2 541 273 A1 wird das Empfangssignal an einem Splitterelement in zwei Pfade für einen hoch- und einen niederfrequenten Anteil geteilt. Mittels des hochfrequenten Anteils werden harte Ziele oder Objekte detektiert, während der niederfrequente Anteil zur Bestimmung der Sichttrübung genutzt wird. Das erfordert einen doppelten Auswertungspfad, der schon im analogen Teil der Auswertung beginnt. Außerdem wird auch hier aus einer einzelnen Abstandsmessung die Sichttrübung bewertet.

Die DE 197 17 399 A1 schlägt vor, in einem Pulslaufzeitverfahren anhand von typischen Signalformen Entfernung, Zuordnung von Objekten und Art sowie Maß der Sichtweiteneinschränkung zu ermitteln. Dafür wird eine allerdings Fuzzy-Logik eingesetzt, deren Einsatz sich in der Sicherheitstechnik verbietet.

Die EP 1 085 346 A1 versucht das Empfangssignal als Folge von Gauß-Impulsen zu modellieren, um so atmosphärische Partikel und Objekte zu lokalisieren. Die dafür erforderlichen Fouriertransformationen und Korrelationen sind aufwändig. Es ist auch nicht ersichtlich, wie anhand des Modells zuverlässig bewertet werden könnte, ob noch eine für die Sicherheitsfunktion ausreichende Detektionsfähigkeit verbleibt.

Es ist daher Aufgabe der Erfindung, den verlässlichen Einsatz eines gattungsgemäßen Sensors im Außenbereich zu ermöglichen.

Diese Aufgabe wird durch einen Sensor und ein Verfahren zur Erfassung und Abstandsbestimmung von Objekten nach Anspruch 1 beziehungsweise 13 gelöst. Zur Abstandsmessung mit einem Lichtlaufzeitverfahren, das ein Puls-, Phasen- oder Pulsmittelungsverfahren sein kann, wird ein Sendelichtstrahl ausgesandt, nach Remission oder Reflexion an einem Objekt wieder empfangen und das Empfangssignal ausgewertet. Dabei ist eine bewegliche, insbesondere drehbare Ablenkeinheit vorgesehen, beispielsweise ein rotierender Optikkopf mit Lichtsender und Lichtempfänger oder ein rotierender Drehspiegel, mit deren Hilfe der Sensor periodisch zumindest einen Abschnitt einer Scan- oder Überwachungsebene abtastet.

Die Erfindung geht von dem Grundgedanken aus, die eventuell durch Umwelteinflüsse eingeschränkte Detektionsfähigkeit des Laserscanners durch Bewertung einer Vielzahl von Abstandsmessungen zu überwachen. Dazu wird eine abstandsabhängige Verteilung von Messergebnissen der Abstandsmessungen gebildet. Beispielsweise wird der Abstandsmessbereich bis zu einer maximalen Reichweite in Bins unterteilt und ein Histogramm erzeugt, in dessen Bins eine Messgröße der jeweils beitragenden Abstandsmessung kumuliert wird. Aus der Verteilung wird dann mindestens eine Eigenschaft abgeleitet, welche die Verteilung möglichst trennscharf charakterisieren sollte. Der Laserscanner kennt eine entsprechende Referenzeigenschaft einer Referenzverteilung bei ausreichender Sicht, die vorzugsweise fest vorgegeben, vorab parametriert oder eingelernt wurde. Es ist dazu nicht erforderlich, die ganze Referenzverteilung zu kennen, der Sensor benötigt nur die Referenzeigenschaft, die im einfachsten Fall lediglich eine Schwelle sein kann. Ein Vergleich der aus den Abstandsmessungen gewonnenen Eigenschaft der Verteilung mit der Referenzeigenschaft erlaubt dann eine Aussage über die Detektionsfähigkeit. Zahlreiche Beispiele für einfache und komplexere Vergleiche, d. h. Eigenschaften und Referenzeigenschaften, werden im weiteren Verlauf erläutert. Solche Kriterien können einzeln oder in Kombination angewandt werden. Ausreichende Sicht bedeutet hier, dass unter solchen äußeren Bedingungen der Sensor noch die Spezifikation erfüllen kann und insbesondere verlässlich bis in eine geforderte Mindestreichweite misst. Für die Sicherheitstechnik ist wichtig, dass Umwelteinflüsse sicher erkannt werden, unter denen die spezifizierte Detektionsfähigkeit nicht mehr gewährleistet ist. Dazu genügt es, eine Sichtweitenschwelle zu überwachen. Je nach Ausführungsform und Anwendung soll aber nicht nur eine binäre Aussage getroffen werden, ob der Sensor noch messfähig im Sinne der Spezifikation ist, sondern es kann auch eine Maximalentfernung bestimmt werden, bis zu der noch sicher gemessen wird. Dafür können insbesondere verschiedene Referenzeigenschaften für verschiedene Maximalentfernungen verwendet werden.

Die Erfindung hat den Vorteil, dass eine sichere Erkennung von Outdoor-Einflüssen auf einen Laserscanner ermöglicht wird. Damit ist die sichere Detektion und hohe Verfügbarkeit des Laserscanners auch bei Nebel, Regen und Schnee gewährleistet. Es werden ohnehin vorhandene Messwerte verwendet, um sicherheitsgerichtet das Auftreten von kritischen Störeinflüssen wie dichtem Nebel oder starkem Niederschlag zu detektieren. Besonders vorteilhaft ist dies für den mobilen Einsatz an Fahrzeugen (wie AGV, Automated Guided Vehicle), da keine Notwendigkeit besteht, Signalreserven für extreme Umwelteinflüsse vorzuhalten. Dadurch würde die Schutzfeldreichweite des Laserscanners unverhältnismäßig reduziert, mit der Folge geringer Fahrzeuggeschwindigkeiten und damit unnötiger Einschränkungen der Produktivität. Stattdessen kann erfindungsgemäß das Fahrzeug seine Geschwindigkeit situationsangepasst optimal einstellen und genau wie ein menschlicher Fahrer bei schlechter Sicht die Geschwindigkeit sicherheitsgerichtet vermindern. Der Einfluss auf die Produktivität ist erheblich, weil der Laserscanner selbst bei starkem Niederschlag oder starkem Nebel noch funktioniert und das Fahrzeug immer noch mit relativ schneller Geschwindigkeit fahren kann. Würde dagegen der Laserscanner aufgrund von Umwelteinflüssen ausfallen, müsste das Fahrzeug aus Sicherheitsgründen in Schleichfahrt bei weniger als 0,25 m/s übergehen und wäre daher im Außenbereich deutlich langsamer unterwegs.

Die Auswertungseinheit ist bevorzugt dafür ausgebildet, die Verteilung aus Abstandsmessungen in unterschiedlichen Winkelstellungen der periodischen Ablenkung und/oder aus mehreren Perioden der periodischen Ablenkung zu bilden. Die wetterbedingten Umwelteinflüsse werden als homogen oder zufällig verteilt angesehen. Um dies angemessen zu beurteilen, sollen in die Verteilung Abstandsmessungen aus mehreren oder allen und nicht nur bestimmten Richtungen eingehen. In ähnlicher Weise wird die statistische Basis verbreitert, wenn Abstandsmessungen aus mehreren Perioden oder Scans Berücksichtigung finden, damit singuläre Messereignisse nicht übergewichtet werden.

Die Auswertungseinheit ist bevorzugt dafür ausgebildet, die Verteilung aus einer vorgegebenen Vielzahl von Abstandsmessungen zu bilden. Dadurch bildet die Verteilung die tatsächlichen Umwelteinflüsse ausreichend ab. Es wäre denkbar, anstelle der Vielzahl einen gewissen Zeitraum vorzugeben, in dem Abstandsmessungen gesammelt werden. Wenn wie üblich die Messrate und Periode konstant sind, ergibt sich daraus kein praktischer Unterschied. Die in die Verteilung eingehenden Abstandsmessungen müssen aber nicht zwingend kontinuierlich aufeinanderfolgen, es kann beispielsweise jede i-te Abstandsmessung beziehungsweise jeder j-te Scan verwendet werden.

Die Auswertungseinheit ist bevorzugt dafür ausgebildet, eine Verteilung der Anzahl der gemessenen Abstände zu bilden. Die Verteilung bildet somit direkt die Häufigkeit ab, mit der Objekte in den jeweiligen Abständen erfasst wurden. Das ist eine sehr einfache Verteilung, welche aber sofort eine zugängliche Information bietet. Beispielsweise werden bei Nebel und auch bei Niederschlag deutlich mehr kurze Abstände gemessen. Die Referenzverteilung bei ausreichender Sicht hängt in diesem Fall sehr stark von dem konkreten Szenario ab. Es lassen sich aber dennoch Referenzeigenschaften angeben, wie dass üblicherweise keine übermäßig gehäuften Abstandsmessungen aus kürzeren Abständen auftreten oder dass auch große Abstände gemessen werden.

Die Auswertungseinheit ist bevorzugt dafür ausgebildet, eine Verteilung der Empfangspegel zu bilden. Statt der reinen Häufigkeit werden hier in der Verteilung die Pegel aus den jeweiligen Abständen ausgewertet. Dem liegt zugrunde, dass durch Sichttrübung Licht verloren geht und die Pegel deshalb absinken. Eine Verteilung der Empfangspegel kann anstelle oder zusätzlich zu einer Verteilung der Anzahl gebildet und ausgewertet werden.

Die Auswertungseinheit ist bevorzugt dafür ausgebildet, die Verteilung nur aus Abstandsmessungen zu bilden, die ähnliche Abstände in einem kleinen Winkelbereich bilden und die nur für höchstens einige Wiederholungen der periodischen Ablenkung auftreten. Ähnliche Abstände nur über einen kleinen Winkelbereich, möglicherweise nur eine einzelne Abstandsmessung, sind das Messergebnis, wenn der Scanstrahl auf ein kleines Objekt trifft. Wenn sich ein solches Messergebnis im nächsten Scan nicht wiederholt, handelt es sich um ein schnell bewegliches kleines Objekt. Beides zusammen ist für Niederschlag charakteristisch. Bei schneller Scanwiederholrate könnte eine Schneeflocke eventuell auch über zwei oder drei Scans erfasst sein. Ein weiteres denkbares Kriterium für Niederschlag ist, dass die Ereignisse sich zufällig über den Winkelbereich verteilen. Insgesamt ist der Sensor so in der Lage, Niederschlag anhand des Auftretens sporadischer und örtlich verteilter Detektionen und deren statistischer Auswertung sicherheitsgerichtet zu erkennen.

Vorzugsweise wird eine Hüllkurve der Verteilung gebildet. Da sich die Verteilung aus einer endlichen Zahl von Abstandsmessungen ergibt, ist sie zunächst diskret, beispielsweise ein Histogramm. Darüber kann eine Hüllkurve gebildet werden, um eine kontinuierliche Funktion zur Verfügung zu haben oder die Verteilung zu glätten. Die Referenzverteilung sollte auch als Hüllkurve vorliegen beziehungsweise eine Referenzhüllkurve gebildet werden, damit die Vergleichbarkeit gegeben ist. Es kann aber auch andere Wege geben, eine für den Vergleich mit einer Hüllkurve geeignete Referenzeigenschaft aufzufinden.

Die Auswertungseinheit ist bevorzugt dafür ausgebildet, die Verteilung mit der Referenzverteilung zu vergleichen. Der Vergleich erfolgt also auf Ebene der Verteilungen als solche. Damit wird die volle Information genutzt, um zu beurteilen, ob die Verteilung noch hinreichend der Referenzverteilung entspricht, um detektionsfähig zu sein. Es ist aber auch denkbar, bei diesem Vergleich der gesamten Verteilungen nur einen oder wenige Bewertungsfaktoren zu gewinnen, wie etwa durch Korrelation oder Berechnen eines Gesamtunterschieds. Für letzteres sind alle bekannten Maße denkbar, wie aufsummierte Betragsunterschiede oder Unterschiedsquadrate. Der Vergleich kann sich auf Teilbereiche der Verteilungen beschränken.

Die Auswertungseinheit ist bevorzugt dafür ausgebildet, als Eigenschaft der Verteilung ein Charakteristikum zu bestimmen, insbesondere ein Maximum, einen Wendepunkt oder ein Integral beziehungsweise im diskreten Fall eine Summe. Ein entsprechendes Charakteristikum wird als Referenzeigenschaft vorgegeben oder vorzugsweise vorab als Referenzeigenschaft aus der Referenzverteilung gewonnen. Um zwei konkrete Beispiele zu nennen, wird das Maximum sowohl einer Verteilung der Anzahl der gemessenen Abstände wie der Empfangspegel mit dichterem Nebel zu kleineren Abständen wandern, und ein Integral über die Verteilung der Empfangspegel oder einen bestimmten Abschnitt davon wird sich mit dichterem Nebel reduzieren, weil Licht durch Streuung verloren geht.

Die Auswertungseinheit ist bevorzugt dafür ausgebildet, als Eigenschaft einen Abstand zu bestimmen, ab dem die Verteilung unter eine Mindestschwelle fällt. Nebel oder starker Niederschlag können dafür sorgen, dass nur noch wenige bis praktisch gar keine größeren Abstände mehr gemessen werden. Um nicht mit der Schwelle Null oder nahe Null an einer festen Position arbeiten zu müssen, was etwas anfällig für zufällige Ausreißer sein kann, ist denkbar, die Verteilung quasi von unendlich her bis zu einem Grenzabstand zu integrieren und zu verlangen, dass dort für ausreichende Sicht eine mehr als marginale Masse der Verteilung verbleiben muss.

Die Auswertungseinheit ist bevorzugt dafür ausgebildet, als Eigenschaft mindestens das erste Moment der Verteilung zu bestimmen. Das erste Moment beziehungsweise der Mittelwert oder Schwerpunkt der Verteilung rückt anschaulich nachvollziehbar mit zunehmender Sichttrübung näher an den Sensor heran und ist damit ein besonders geeignetes Kriterium. Dennoch ist auch ein Vergleich höherer Momente denkbar.

Der Sensor ist vorzugsweise als sicherer Laserscanner beziehungsweise Sicherheitslaserscanner ausgebildet. Vorzugsweise weist der Sensor einen sicheren Ausgang auf, und dessen Auswertungseinheit ist dafür ausgebildet, bei Erkennen eines unzulässigen Eingriffs in ein vorgebbares Schutzfeld innerhalb des Überwachungsbereichs ein Absicherungssignal über den sicheren Ausgang auszugeben. Aufgrund der Fähigkeit, die eigene Detektionsfähigkeit zu überprüfen, werden mit einem erfindungsgemäßen Sensor auch sicherheitstechnische Anwendungen im Outdoorbereich beziehungsweise in staubigen oder anders verunreinigten Umgebungen möglich. Das Absicherungssignal kann ein Nothalt sein. Gerade in mobilen Anwendungen genügt aber oft auch ein Verlangsamen, beziehungsweise ein Ausweichen kann die geeignetere Maßnahme sein.

Die Auswertungseinheit ist bevorzugt dafür ausgebildet, ein Absicherungssignal auszugeben, wenn der Laserscanner nicht detektionsfähig ist. Die spezifizierte Reichweite kann dann nicht mehr gewährleistet werden, der Laserscanner seine Sicherheitsfunktion nicht mehr erfüllen. Ein großer erfindungsgemäßer Vorteil ist, dass diese Situation sicher erkannt wird. Somit kann beispielsweise durch ein angepasstes Umschalten der Geschwindigkeit eines autonomen Fahrzeugs beziehungsweise der Schutzfeldreichweite des Sicherheitslaserscanners reagiert werden. Zu Diagnosezwecken, oder für nicht sicherheitstechnische Anwendung, kann auch die Sichtweite erkannt und ausgegeben werden, bis zu der immer noch ausreichend zuverlässig gemessen wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

| | |
|---|---|
| Fig. 1 | eine schematische Schnittdarstellung einer beispielhaften Ausführungsform eines erfindungsgemäßen Sicherheitssensors; |
| Fig. 2 | eine beispielhafte abstandsabhängige Verteilung der Anzahl gemessener Abstände bei Nebel; |
| Fig. 3 | einen Vergleich beispielhafter abstandsabhängiger Verteilungen der Pegel bei klarer Sicht und bei Nebel; |
| Fig. 4 | eine Ansicht gemäß Figur 3, wobei zusätzlich jeweils Hüllkurven der Verteilungen eingezeichnet sind; |
| Fig. 5a-b | beispielhafte von einem Laserscanner gemessene Konturen bei Regen mit jeweils einem erfassten Regentropfen an unterschiedlicher Position; |

Fig. 6      eine beispielhafte abstandsabhängige Verteilung von erfassten Partikeln oder Regentropfen; und

Fig. 7      die Verteilung gemäß Figur 6 als Beispiel für starken Niederschlag und zusätzlich eine weitere abstandsabhängige Verteilung von erfassten Re-gentropfen bei schwachem Niederschlag.

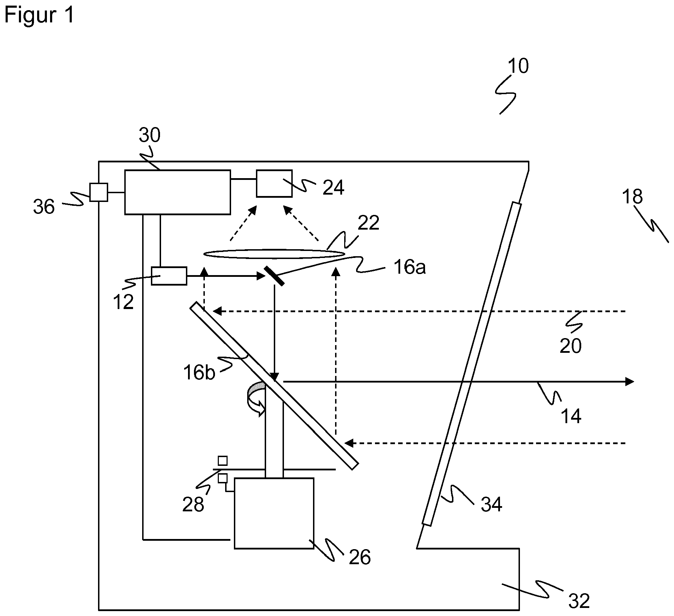

Figur 1 zeigt eine schematische Schnittdarstellung durch einen Laserscanner 10. Ein Lichtsender 12, beispielsweise ein Laser, erzeugt einen Lichtstrahl 14, der für ein Puls- oder Pulsmittelungsverfahren einzelne Lichtimpulse
aufweist oder dessen Amplitude für ein Phasenverfahren moduliert ist. Der Lichtstrahl 14 wird über Lichtablenkeinheiten
16a-b in einen Überwachungsbereich 18 gelenkt und dort von einem gegebenenfalls vorhandenen Objekt remittiert.
Das remittierte Licht 20 gelangt wieder zu dem Laserscanner 10 zurück und wird dort über die Ablenkeinheit 16b und
mittels einer Empfangsoptik 22 von einem Lichtempfänger 24 detektiert, beispielsweise einer Photodiode.

Die Lichtablenkeinheit 16b ist hier als Drehspiegel ausgestaltet, die durch Antrieb eines Motors 26 kontinuierlich
rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich
18. Wird ein von dem Lichtempfänger 24 empfangenes reflektiertes Lichtsignal 20 aus dem Überwachungsbereich 18
empfangen, so kann aus der Winkelstellung der Ablenkeinheit 16b mittels des Encoders 28 auf die Winkellage des
Objektes in dem Überwachungsbereich 18 geschlossen werden.

Zusätzlich wird die Laufzeit der einzelnen Laserlichtpulse von ihrem Aussenden bis zu dem Empfang nach
Reflexion an dem Objekt in dem Überwachungsbereich 18 ermittelt beziehungsweise die Phasenverschiebung zwischen
ausgesandtem und empfangenem Licht bestimmt. Aus der daraus resultierenden Lichtlaufzeit wird unter Verwendung
der Lichtgeschwindigkeit auf die Entfernung des Objektes von dem Laserscanner 10 geschlossen. Diese Auswertung
erfolgt in einer Auswertungseinheit 30, die dafür mit dem Lichtsender 12, dem Lichtempfänger 24, dem Motor 26 und
dem Encoder 28 verbunden ist. Es stehen nun über den Winkel und die Entfernung zweidimensionale Polarkoordinaten
aller Objekte in dem Überwachungsbereich 18 zur Verfügung. Alle genannten Funktionskomponenten sind in einem
Gehäuse 32 angeordnet, das im Bereich des Lichtaus- und Lichteintritts eine Frontscheibe 34 aufweist.

In einer sicherheitstechnischen Anwendung vergleicht die Auswertungseinheit 30 die Position der erfassten
Objekte mit einem oder mehreren Schutzfeldern, deren Geometrie der Auswertungseinheit 30 durch entsprechende
Parameter vorgegeben oder konfiguriert ist. Damit erkennt die Auswertungseinheit 30, ob ein Schutzfeld verletzt ist,
also ob sich ein unzulässiges Objekt darin befindet, und schaltet je nach Ergebnis einen Sicherheitsausgang 36 (OSSD,
Output Signal Switching Device). Dadurch wird beispielsweise ein Nothalt einer angeschlossenen und von dem Laserscanner 10 überwachten Maschine ausgelöst oder ein Fahrzeug abgebremst, auf dem der Laserscanner 10 montiert
ist. Ein solcher Laserscanner wird durch Erfüllung der einleitend genannten Normen und die dafür erforderlichen
Maßnahmen als Sicherheitslaserscanner ausgebildet.

Es ist denkbar, zumindest einen Teil der Auswertung außerhalb des Laserscanners 10 vorzunehmen. Vorzugsweise ist aber zumindest die gesamte sicherheitsrelevante Auswertung einschließlich der Abstandsmessung und
der nachfolgend erläuterten Beurteilung der eigenen Detektionsfähigkeit Teil des Laserscanners 10, der damit autonom
messen und die Sicherheit beurteilen kann.

Der anhand der Figur 1 beschriebene Laserscanner 10 dient als Beispiel eines Sensors, aber die Erfindung
ist darauf nicht beschränkt. Es sind insbesondere von Laserscannern unterschiedlichste andere Bauformen bekannt,
etwa mit biaxialer statt hier koaxialer Anordnung von Lichtsender 12 und Lichtempfänger 24 oder einem drehenden
Messkopf, der Lichtsender 12 und/oder Lichtempfänger 24 umfasst oder durch Lichtleiter angekoppelt ist, sowie mit
mehreren Messmodulen oder zusätzlicher Beweglichkeit, um einen dreidimensionalen Raumbereich abzutasten.

Der Laserscanner 10 ist auch unter Umgebungsbedingungen mit eingeschränkter Sicht als Sicherheitslaserscanner einsetzbar, also outdoorfähig beziehungsweise robust gegenüber verunreinigten Umgebungen. Dazu ist die
Auswertungseinheit 30 in der Lage, anhand ihrer Messergebnisse zu beurteilen, ob der Laserscanner 10 noch detektionsfähig ist. Andernfalls kann rechtzeitig reagiert werden, etwa die überwachte Maschine abgeschaltet, ein Fahrzeug
abgebremst oder dessen Geschwindigkeit reduziert werden.

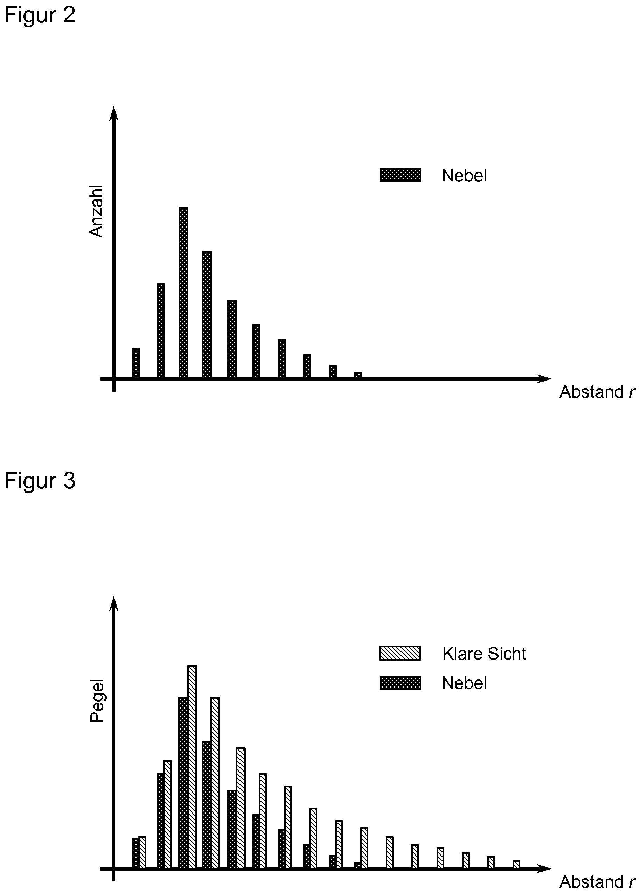

Figur 2 illustriert ein Ausführungsbeispiel zur Erkennung von Nebel durch statistische Auswertung einer Vielzahl
von Abstandsmesswerten des Laserscanners 10 vorzugsweise aus verschiedenen Richtungen und verschiedenen
Scans. Dargestellt ist eine beispielhafte Häufigkeitsverteilung der Abstandsmessungen bei Nebel, d. h. ein Histogramm,
in deren Bins kumuliert ist, wie oft ein Abstand im jeweiligen Abstandsinterval des Bins gemessen wurde. Durch die
stark abstandsabhängige Dämpfung des Nebels finden sich kaum oder keine Messwerte bei höheren Abständen. Denn
wenn in einer Abstandsmessung das Objekt weit vom Laserscanner 10 entfernt ist, wird gar kein Lichtecho mehr empfangen und folglich auch kein Messwert generiert, oder nur ein vorgegebener Default-Messwert. Deshalb zeigt die
Verteilung nach vielen Abstandsmessungen aus verschiedenen Richtungen und zu verschiedenen Zeitpunkten eine
Lücke bei großen Abständen, wobei gegebenenfalls der Default-Messwert zu berücksichtigen wäre.

Bei freier Sicht dagegen würde innerhalb der gesamten Messreichweite des Laserscanners 10, die durchaus
50-100 m und mehr betragen kann, eine entsprechende Verteilung auch viele Abstandswerte bei hohen Entfernungen
aufweisen. Das hängt natürlich noch von der Szenerie ab, weil hier die Abstände nicht durch Umwelteinflüsse, sondern feste Objekte der Szenerie bestimmt sind. In einer mobilen Anwendung kann man hier bei ausreichend Statistik zwar keine Gleichverteilung erwarten, da nahe Objekte scheinbar größer sind und deshalb überproportional oft in wiederholten Abstandsmessungen erfasst werden. Dennoch lässt sich sehr klar unterscheiden, ob Nebel sämtliche fernen Abstandswerte unterdrückt oder nicht. Dazu muss gar keine vollständige Referenzverteilung bei klarer Sicht betrachtet werde, da es sehr geeignete allgemeingültige Referenzeigenschaften wie das Vorhandensein großer Abstände gibt. Dabei kann die Auswertung zusätzlich sichere Positionsinformationen berücksichtigen. Abhängig von der aktuellen Position des Fahrzeugs werden dann gezielt Referenzmessungen zur Sichtbarkeit angestoßen und gegenüber Umgebungseinflüssen durch Szenerie, Indoorpassagen und dergleichen robuster gemacht. Die notwendige Zeit wäre vorhanden, weil bereits für mobile Anwendungen häufig Sonderregeln gelten, wie lange es maximal dauern darf, bis ein Detektionsverlust oder eine Einschränkung aufgedeckt werden muss.

Für eine sicherheitsgerichtete Nebelerkennung kumuliert demnach die Auswertungseinheit 30 im Verlauf einer festgelegten oder konfigurierbaren Zeitdauer die Verteilung der gemessenen Abstandswerte. Aufgrund der konstanten Messrate ergibt sich damit eine bestimmte Vielzahl von Abstandsmessungen, die eine ausreichende statistische Basis sichert. Dann wird verglichen, ob sich in der Verteilung noch Abstandswerte oberhalb eines Grenzabstands finden, wobei der Grenzabstand beispielsweise anhand einer Sichtweite bei Nebel bestimmt ist, in dem die Detektionsfähigkeit gerade noch gegeben ist. Gibt es in der Verteilung keine solchen größeren Abstände, wurden also innerhalb der Bewertungsdauer keine Messwerte mehr oberhalb des Grenzabstands erfasst, geht die Auswertungseinheit 30 davon aus, dass zu dichter Nebel vorliegt, und leitet eine sicherheitsgerichtete Reaktion wie die Reduktion einer Fahrzeuggeschwindigkeit ein. Auf diese Weise wird eine sicherheitsrelevante Entscheidung aus den statistischen Eigenschaften einer großen Zahl von Einzelmessungen getroffen.

Es ist nicht ausgeschlossen, dass zufällig die Umgebung in der konkreten Szenerie auch ohne Nebel eine Verteilung ergibt, wie sie in Figur 2 dargestellt ist. In bevorzugter Anwendung des Laserscanners 10 zur Geschwindigkeitsanpassung eines mobilen Fahrzeugs kann das aber schlimmstenfalls kurzfristig geschehen, so dass es bei hinreichend langer Messwertakkumulation zu keiner Fehleinschätzung kommt. Allerdings sollte die Umgebung des Laserscanners 10 zumindest prinzipiell auch große Messabstände anbieten. Andererseits würde selbst ein fehlerhaft erkannter Nebel nur zu einer unnötigen sicherheitsgerichteten Reaktion wie der Umschaltung auf eine reduzierte Geschwindigkeit führen und betrifft damit allein die Verfügbarkeit, ohne die Sicherheitsfunktion zu beeinträchtigen.

Figur 3 illustriert eine weitere Ausführungsform zur Überprüfung der Detektionsfähigkeit des Laserscanners 10 bei Nebel. Während in der Ausführungsform gemäß Figur 2 eine reine Häufigkeitsverteilung betrachtet wird, werden nun abstandsabhängige Verteilungen des Empfangspegels gebildet, um die entfernungsabhängigen Echostärken oder Levelwerte zu betrachten. Dementsprechend ist in Figur 3 die Gesamtheit der betrachteten Abstandsmessungen in einem Diagramm dargestellt, bei dem Abstandswerte auf der X-Achse und Levelwerte auf der Y-Achse aufgetragen sind. Bei einer Histogrammerzeugung wird dazu das Bin zu einem gemessenen Abstand nicht einfach heraufgezählt, sondern darin der Empfangspegel kumuliert. Vorzugsweise wird die Häufigkeit außerdem gezählt, um abschließend einen Mittelwert in den jeweiligen Bins zu bilden, oder der Mittelwert wird fortlaufend gebildet.

Nebel führt durch die Dämpfung dazu, dass mit zunehmendem Messabstand der Levelwert sinkt und sich der Schwerpunkt der entsprechenden Verteilung zu kleineren Abständen verschiebt. Der umgekehrte Fall, das Auftreten von Messwerten bei großen Messabständen trotz dichten Nebels, ist dagegen zumindest unter der sicherheitstechnisch akzeptierten Annahme homogener Nebelverteilung physikalisch nicht möglich, weil die Nebeldämpfung immer zu einer Abschwächung und nicht zu einer Verstärkung von Signalen bei großen Abständen führt. Allerdings sollte dafür der Überwachungsbereich 18 auch große Messabstände anbieten. Wenn es aufgrund von nahen Objekten in allen oder zumindest zu vielen Richtungen keine hinreichend große Ausbreitungswege im Nebel gibt, wird die Dämpfung gering bleiben und eine Abgrenzung zwischen Nebeleinfluss und zufälligen Kontureinflüssen schwieriger. Andererseits kann der Effekt auch bei Nebel nachgewiesen werden, der ein Signal nicht vollständig verschluckt, sondern nur abschwächt.

In Figur 3 ist die unterschiedliche Verteilung der Empfangspegel bei Nebel im Vergleich zu einer Referenz bei klarer Sicht deutlich erkennbar. Die Auswertungseinheit 30 hat eine Vielzahl von auch untereinander kombinierbaren Möglichkeiten, diesen Unterschied festzustellen: Bei Nebel gibt es ab einem gewissen Grenzabstand gar keine Empfangspegel mehr, die gesamte Verteilung und insbesondere der Schwerpunkt hat sich nach links verschoben, der Gesamtpegel, d. h. Summe oder Integral über die Verteilung, ist geringer, das Maximum nach links verschoben, und in diesem Fall sind sogar alle einzelnen Empfangspegel in einem Abstandsbereich kleiner.

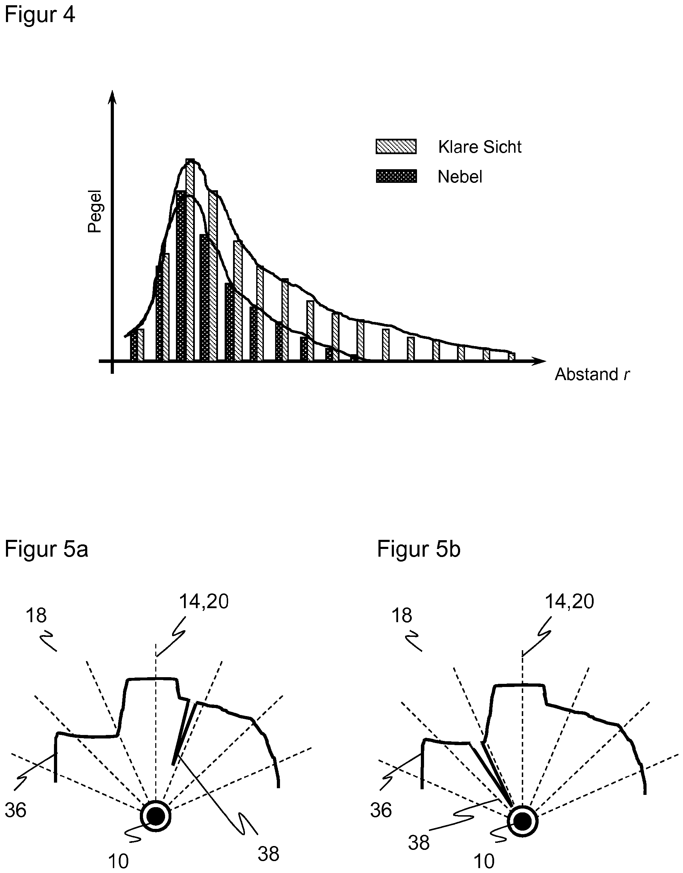

Ein weiteres Kriterium besteht darin, die Verteilungen insgesamt miteinander zu vergleichen. Dazu können die Unterschiede in den einzelnen Bins oder an den diskreten Stützstellen aufaddiert werden, vorzugsweise deren Betrag oder Quadrat. Figur 4 illustriert einen solchen Gesamtvergleich anhand von Hüllkurven oder Einhüllenden, wobei diese Begriffe hier sehr weit verstanden sein sollen und auch Interpolationsfunktionen einschließen. Damit eröffnen sich weitere analytische Möglichkeiten des Vergleichs von Funktionen festzustellen, ob die gemessene Verteilung signifikant von einer Referenz bei klarer beziehungsweise noch ausreichender Sicht abweicht.

Es ist nicht unbedingt erforderlich, die Form der Hüllkurve insgesamt einzulernen und als Referenz zu verwenden. Es können auch aus der Hüllkurve Charakteristika abgeleitet werden, die dann mit entsprechenden Referenzeigenschaften verglichen werden, wie Schwerpunkt, Maximum, Wendepunkte, Abfallen unter einen gewissen Bruchteil des Maximum, Integral der gesamten Funktion oder eines Teilabschnitts, insbesondere jenseits eines Grenzabstands, und weitere.

Figur 5a-b illustriert die Messsituation im Regen. Bei Niederschlag statt Nebel als zu betrachtender Umwelteinfluss können im Prinzip die gleichen Verfahren verwendet werden. Allerdings ist die Annahme einer homogenen Dämpfung oder Echounterdrückung jedenfalls nicht bei jeder Form des Niederschlags gegeben, und außerdem weist Niederschlag Partikel in Form von Regentropfen oder Schneeflocken auf, die von dem Laserscanner 10 je nach System und Form des Niederschlags auch als Objekte erfasst werden. Deshalb werden vorzugsweise andere oder zusätzliche Kriterien für die Bewertung herangezogen.

Der mittig unten als kleines Symbol gezeigte Laserscanner 10 nimmt durch seine Scanstrahlen 14, 20 eine Kontur 36 aus Abstandswerten auf. Trifft der ausgesandte Lichtstrahl 14 auf einen Regentropfen, so wird er bereits dort reflektiert und folglich der Abstand zu dem Regentropfen gemessen. Das führt zu einem Ausreißer 38 in der Kontur 36, der sich aber wie zwischen Figur 5a und 5b von Scan zu Scan an unterschiedlichen Stellen zeigt. Selbstverständlich ist denkbar, dass in einer Kontur 36 mehrere Ausreißer aufgrund mehrerer Regentropfen auftreten.

Typische Erkennungszeichen von Niederschlag sind demnach einzelne Messwerte bei unterschiedlichen Abständen, die nur einen sehr kleinen Winkelbereich umfassen, nur vorübergehend in einem einzelnen Scan auftreten und schon im nächsten Scan wieder verschwunden sind und an anderen Stellen auftreten. Je nach Niederschlag und Drehfrequenz der Ablenkeinheit 16b ist auch denkbar, dass ein Niederschlagspartikel über zwei oder mehr Scans erfasst wird. Die Auswertungseinheit 30 ist also in einer Ausführungsform der Lage, Niederschlagspartikel wie Regentropfen oder Schneeflocken anhand der genannten Kriterien wie Winkelausdehnung, kurzzeitiges Auftreten und zufällige Verteilung zu identifizieren.

Viele Laserscanner besitzen bereits einen Filteralgorithmus gegen Störereignisse, mit dem Objekte ausgeblendet werden, die klein und/oder nur kurzzeitig detektierbar sind, um die Robustheit zu erhöhen. Es wäre denkbar, solche Filterereignisse zu zählen und beispielsweise mit einem Schwellwert zu vergleichen. Viele Filterereignisse bedeuten dann ein hohes Niederschlagsaufkommen.

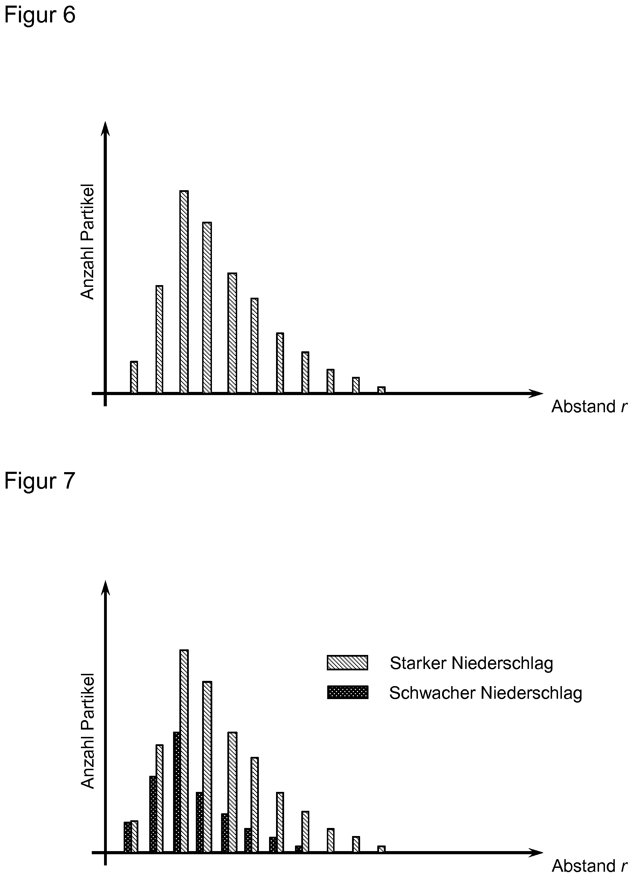

Figur 6 zeigt eine abstandsabhängige Verteilung derartiger Niederschlagspartikel aus einer Vielzahl von Abstandsmessungen. Regen und Schnee kann aus einer derartigen Häufigkeitsverteilung eindeutig erkannt werden, weil dies in Abhängigkeit von den optomechanischen Eigenschaften des Laserscanners 10 einer bestimmten Signatur gehorcht, die in Form einer Referenzverteilung oder daraus abgeleiteter Referenzeigenschaften bekannt sein kann.

Durch stetiges Zählen der Anzahl der Partikel an ihren jeweiligen Abständen, ggf. unter Prüfen ihres zufälligen Auftretens an beliebigen Winkelabständen, entsteht über die gewonnene Verteilung eine Detektionsstatistik, aus der Niederschlag im sicherheitstechnischen Sinne kontinuierlich und zuverlässig erkennbar ist. Die konkrete Ausführung kann hier auf verschiedene Arten passieren, beispielsweise über eine gleitende Summe an bestimmten Abständen oder Abstandsbereichen. Bereits die Gesamtsumme der Verteilung enthält mit der Gesamtzahl von Niederschlagspartikeln im Betrachtungszeitraum eine sehr relevante Information über die Intensität des Niederschlags. Die abstandsabhängige Verteilung für Niederschlag bietet somit genug Information für eine Bewertung in einer Qualität, die einem sicherheitstechnischen Umfeld erforderlichenfalls auch mit einer sicherheitsgerichteten Kennzahl genügt.

Figur 7 zeigt noch vergleichend eine abstandsabhängige Verteilung von Niederschlagspartikeln bei schwachem und starkem Niederschlag. Es ändert sich demnach nicht zwingend nur die Gesamtzahl von Niederschlagspartikeln, sondern möglicherweise auch deren abstandsabhängige Verteilung. Somit ist denkbar, die Verteilung eines noch tolerierten Niederschlags als Referenz vorzugeben und im Betrieb zur Überwachung der eigenen Detektionsfähigkeit mit dieser Referenzverteilung oder daraus abgeleiteten Referenzeigenschaften zu vergleichen.

Die dargestellten Auswertungsmöglichkeiten sind beispielhaft zu verstehen, es gibt weitere Möglichkeiten. Im Falle festgelegter, wiederholter Fahrwege eines mit dem Laserscanner 10 abgesicherten Fahrzeugt kann eine genaue Abstandsverteilung bei klarer Sicht als Referenz eingelernt werden. Anstelle der genannten Kriterien, mit denen Verteilungen bewertet werden, sind auch komplexere Verfahren wie Korrelation oder Mustererkennung auf Basis von maschinellem Lernen denkbar. Weiterhin ist denkbar, in der jeweiligen Einzelmessung nicht nur den Abstand zu bestimmen, sondern das Empfangssignal insgesamt aufzuzeichnen und zu untersuchen. Nebel und Niederschlag sind hierin insbesondere an einer unerwartet starken Dämpfung beziehungsweise weichen Flanken erkennbar.

Wird der Laserscanner 10 in einer sehr weitläufigen Umgebung eingesetzt, so kann es passieren, dass stets oder zumindest zeitweise gar keine Messwerte innerhalb des zugänglichen Messbereichs erfasst werden. Das gilt insbesondere bei klarer Sicht, wenn der Sendelichtstrahl 14 einfach ungehindert in die Ferne abgestrahlt wird. Um zu vermeiden, dass der Laserscanner 10 dies als Ausbleiben von Messwerten in größeren Abständen interpretiert und deshalb sicherheitsgerichtet ein Nebelerkennungssignal sendet beziehungsweise einen Ausfall seiner Detektionsfähigkeit signalisiert, kann die Scanebene derart schief ausgerichtet werden, dass in großem Abstand der Boden erfasst ist.

Die erfindungsgemäße Erkennungsmethode ist anhand von Umwelteinflüssen wie Nebel und Niederschlag beschrieben worden. Sie lässt sich aber auch für andere Einflüsse verwenden, insbesondere wenn sie abstandsabhängig und richtungsunabhängig wirken. Das sind zunächst jegliche Sichttrübungen durch Staub oder Verschmutzung der Optik. Dazu zählen aber auch Degradationserscheinungen oder Driften, die mit der Lichtausbreitung gar nichts zu tun haben, wie Laseralterung, fehlerhafte Einstellung der Verstärkung des Lichtempfängers 12 und dergleichen, die in herkömmlichen Sicherheitslaserscannern mit einem internen Referenzziel überwacht werden.

**Patentansprüche**

1. Optoelektronischer Sensor (10), insbesondere Laserscanner, zur Erfassung und Abstandsbestimmung von Objekten in einem Überwachungsbereich (18), mit einem Lichtsender (12) zum Aussenden eines Sendelichtstrahls (14), einer beweglichen Ablenkeinheit (16b) zur periodischen Ablenkung des Sendelichtstrahls (14) in dem Überwachungsbereich (18), einem Lichtempfänger (24) zum Erzeugen eines Empfangssignals aus von Objekten in dem Überwachungsbereich (18) remittiertem oder reflektiertem Sendelicht (20) sowie einer Auswertungseinheit (30), die für eine Abstandsmessung ausgebildet ist, in der anhand der Lichtlaufzeit des ausgesandten und wieder empfangenen Sendelichtstrahls (14, 20) ein Objektabstand gemessen wird, wobei aus einer Vielzahl von Abstandsmessungen eine abstandsabhängige Verteilung gebildet und aus einer Eigenschaft der Verteilung durch Vergleich mit einer Referenzeigenschaft einer Referenzverteilung bei ausreichender Sicht festgestellt wird, ob oder bis zu welcher Entfernung der Sensor (10) detektionsfähig ist, **dadurch gekennzeichnet, dass** die Auswertungseinheit (30) weiterhin dafür ausgebildet ist, eine Verteilung der Anzahl der gemessenen Abstände zu bilden.

2. Sensor (10) nach Anspruch 1, wobei die Auswertungseinheit (30) dafür ausgebildet ist, die Verteilung aus Abstandsmessungen in unterschiedlichen Winkelstellungen der periodischen Ablenkung (16b) und/oder aus mehreren Perioden der periodischen Ablenkung (16b) zu bilden.

3. Sensor (10) nach Anspruch 1 oder 2, wobei die Auswertungseinheit (30) dafür ausgebildet ist, die Verteilung aus einer vorgegebenen Vielzahl von Abstandsmessungen zu bilden.

4. Sensor (10) nach einem der vorhergehenden Ansprüche, wobei die Auswertungseinheit (30) dafür ausgebildet ist, eine Verteilung der Empfangspegel zu bilden.

5. Sensor (10) nach einem der vorhergehenden Ansprüche, wobei die Auswertungseinheit (30) dafür ausgebildet ist, die Verteilung nur aus Abstandsmessungen zu bilden, die ähnliche Abstände in einem kleinen Winkelbereich bilden und die nur für höchstens einige Wiederholungen der periodischen Ablenkung auftreten.

6. Sensor (10) nach einem der vorhergehenden Ansprüche, wobei eine Hüllkurve der Verteilung gebildet wird.

7. Sensor (10) nach einem der vorhergehenden Ansprüche, wobei die Auswertungseinheit (30) dafür ausgebildet ist, die Verteilung mit der Referenzverteilung zu vergleichen.

8. Sensor (10) nach einem der vorhergehenden Ansprüche, wobei die Auswertungseinheit (30) dafür ausgebildet ist, als Eigenschaft der Verteilung ein Charakteristikum zu bestimmen, insbesondere ein Maximum, einen Wendepunkt oder ein Integral.

9. Sensor (10) nach einem der vorhergehenden Ansprüche, wobei die Auswertungseinheit (30) dafür ausgebildet ist, als Eigenschaft einen Abstand zu bestimmen, ab dem die Verteilung unter eine Mindestschwelle fällt.

10. Sensor (10) nach einem der vorhergehenden Ansprüche, wobei die Auswertungseinheit (30) dafür ausgebildet ist, als Eigenschaft mindestens das erste Moment der Verteilung zu bestimmen.

11. Sensor (10) nach einem der vorhergehenden Ansprüche, wobei der Sensor (10) als sicherer Laserscanner ausgebildet ist, der einen sicheren Ausgang (36) aufweist und dessen Auswertungseinheit (30) dafür ausgebildet ist, bei Erkennen eines unzulässigen Eingriffs in ein vorgebbares Schutzfeld innerhalb des Überwachungsbereichs (18) ein Absicherungssignal über den sicheren Ausgang (36) auszugeben.

12. Sensor (10) nach Anspruch 11,
wobei die Auswertungseinheit (30) dafür ausgebildet ist, ein Absicherungssignal auszugeben, wenn der Sensor (10) nicht detektionsfähig ist.

13. Verfahren zur Erfassung und Abstandsbestimmung von Objekten in nem Überwachungsbereich (18), wobei ein Sendelichtstrahl (14) ausgesandt, periodisch in dem Überwachungsbereich (18) abgelenkt, der remittierte oder reflektierte Sendelichtstrahl (20) erfasst, daraus ein Empfangssignal erzeugt und in einer Abstandsmessung anhand der Lichtlaufzeit des ausgesandten und wieder empfangenen Sendelichtstrahls (14 , 20) ein Objektabstand gemessen wird **dadurch gekennzeichnet**, wobei aus einer Vielzahl von Abstandsmessungen eine abstandsabhängige Verteilung gebildet und aus einer Eigenschaft der Verteilung durch Vergleich mit einer Referenzeigenschaft einer Referenzverteilung bei ausreichender Sicht festgestellt wird, ob oder bis zu welcher Entfernung Objekte sicher erfasst werden können,
**dadurch gekennzeichnet,**
**dass** eine Verteilung der Anzahl der gemessenen Abstände gebildet wird.

**Claims**

1. An optoelectronic sensor (10), in particular a laser scanner, for detecting and determining the distance of objects in a monitoring region (18), the sensor (10) having a light transmitter (12) for transmitting a transmitted light beam (14), a movable deflection unit (16b) for periodically deflecting the transmitted light beam (14) in the monitoring region (18), a light receiver (24) for generating a reception signal from remitted light (20) remitted or reflected from objects in the monitoring region (18), and an evaluation unit (30) which is configured for a distance measurement in which an object distance is measured on the basis of the light time of flight of the transmitted and remitted light beam (14, 20), wherein a distance-dependent distribution is formed from a plurality of distance measurements and it is determined from a property of the distribution by comparison with a reference property of a reference distribution at sufficient sight whether or up to which distance the sensor (10) is capable of detection,
**characterized in that** the evaluation unit (30) is furthermore configured to form a distribution of the number of measured distances.

2. The sensor (10) according to claim 1,
wherein the evaluation unit (30) is configured to form the distribution from distance measurements in different angular positions of the periodic deflection (16b) and/or from several periods of the periodic deflection (16b).

3. The sensor (10) according to claim 1 or 2,
wherein the evaluation unit (30) is configured to form the distribution from a predetermined plurality of distance measurements.

4. The sensor (10) according to one of the preceding claims,
wherein the evaluation unit (30) is configured to form a distribution of reception levels.

5. The sensor (10) according to one of the preceding claims,
wherein the evaluation unit (30) is configured to form the distribution only from distance measurements which have similar distances in a small angular range and which occur only for at most some repetitions of the periodic deflection.

6. The sensor (10) according to one of the preceding claims,
wherein an envelope of the distribution is formed.

7. The sensor (10) according to one of the preceding claims,
wherein the evaluation unit (30) is configured to compare the distribution with the reference distribution.

8. The sensor (10) according to one of the preceding claims,
wherein the evaluation unit (30) is configured to determine a characteristic, in particular a maximum, a turning point or an integral, as a property of the distribution.

**9.** The sensor (10) according to one of the preceding claims,
wherein the evaluation unit (30) is configured to determine as a property a distance from which the distribution falls below a minimum threshold.

**10.** The sensor (10) according to one of the preceding claims,
wherein the evaluation unit (30) is configured to determine as a property at least the first moment of the distribution.

**11.** The sensor (10) according to one of the preceding claims,
wherein the sensor (10) is configured as a safe laser scanner which has a safe output (36) and whose evaluation unit (30) is configured to output a safety signal via the safe output (36) when an inadmissible intrusion into a preconfigurable protective field within the monitoring area (18) is detected.

**12.** The sensor (10) according to claim 11,
wherein the evaluation unit (30) is adapted to output a safety signal when the sensor (10) is not capable of detection.

**13.** A method for detecting and determining the distance between objects in a monitoring region (18), wherein a transmitted light beam (14) is transmitted, is periodically deflected in the monitoring region (18), the remitted or reflected light beam (20) is detected, a received signal is generated therefrom and an object distance is measured in a distance measurement using the light time of flight of the transmitted and received light beam (14, 20). wherein a distance-dependent distribution is formed from a plurality of distance measurements and it is determined from a property of the distribution by comparison with a reference property of a reference distribution at sufficient sight whether or up to which distance the sensor (10) is capable of detection,
**characterized in that** a distribution of the number of measured distances is formed.

**Revendications**

**1.** Capteur optoélectronique (10), en particulier un scanner laser, pour détecter et déterminer la distance d'objets dans une zone de surveillance (18), le capteur (10) comportant un émetteur de lumière (12) pour transmettre un faisceau lumineux émis (14), une unité de déviation mobile (16b) pour dévier périodiquement le faisceau lumineux émis (14) dans la zone de surveillance (18), un récepteur de lumière (24) pour générer un signal de réception à partir de lumière émise (20) ou réfléchie par les objets dans la zone de surveillance (18), et une unité d'évaluation (30) qui est configurée pour une mesure de distance dans laquelle une distance d'objet est mesurée sur la base de la durée de vol de la lumière du faisceau lumineux émis et renvoyé (14, 20),
dans lequel une distribution en fonction de la distance est formée à partir d'une pluralité des mesures de distance et il est déterminée si ou jusqu'à quelle distance le capteur (10) soit capable de détecter, à partir d'une propriété de la distribution par comparaison avec une propriété de référence d'une distribution de référence avec une visibilité suffisante,
**caractérisé en ce que** l'unité d'évaluation (30) est également configurée pour former une distribution du nombre des distances de mesure.

**2.** Capteur (10) selon la revendication 1,
dans lequel l'unité d'évaluation (30) est configurée pour former la distribution à partir de mesures de distance dans différentes positions angulaires de la déviation périodique (16b) et/ou de plusieurs périodes de la déviation périodique (16b).

**3.** Capteur (10) selon la revendication 1 ou 2,
dans lequel l'unité d'évaluation (30) est configurée pour former la distribution à partir d'une pluralité prédéterminée de mesures de distance.

**4.** Le capteur (10) selon l'une des revendications précédentes,
dans lequel l'unité d'évaluation (30) est configurée pour former une distribution de niveaux de réception.

**5.** Capteur (10) selon l'une des revendications précédentes,
dans lequel l'unité d'évaluation (30) est configurée pour former la distribution uniquement à partir de mesures de distance qui présentent des distances similaires dans une petite plage angulaire et qui ne se produisent que pour au moins quelques répétitions de la déflexion périodique.

**6.** Le capteur (10) selon l'une des revendications précédentes,
dans lequel une enveloppe de la distribution est formée.

**7.** Capteur (10) selon l'une des revendications précédentes,
dans lequel l'unité d'évaluation (30) est configurée pour comparer la distribution avec la distribution de référence.

**8.** Capteur (10) selon l'une des revendications précédentes,
dans lequel l'unité d'évaluation (30) est configurée pour déterminer une caractéristique, en particulier un maximum, un point tournant ou une intégrale, comme propriété de la distribution.

**9.** Capteur (10) selon l'une des revendications précédentes,
dans lequel l'unité d'évaluation (30) est configurée pour déterminer en tant que propriété une distance à partir de laquelle la distribution tombe au-dessous d'un seuil minimum.

**10.** Capteur (10) selon l'une des revendications précédentes,
dans lequel l'unité d'évaluation (30) est configurée pour déterminer comme propriété au moins le premier moment de la distribution.

**11.** Capteur (10) selon l'une des revendications précédentes,
dans lequel le capteur (10) est configuré comme un scanner laser de sécurité qui présente une sortie de sécurité (36) et dont l'unité d'évaluation (30) est configurée pour délivrer un signal de sécurité via la sortie de sécurité (36) lorsqu'une intrusion non admissible dans un champ de protection préconfigurable dans la zone de surveillance (18) est détectée.

**12.** Le capteur (10) selon la revendication 11,
dans lequel l'unité d'évaluation (30) est adaptée pour délivrer un signal de sécurité lorsque le capteur (10) n'est pas capable de détecter.

**13.** Procédé pour détecter et déterminer la distance entre des objets dans une région de surveillance (18), dans lequel un faisceau lumineux transmis (14) est transmis, est dévié périodiquement dans la région de surveillance (18), le faisceau lumineux remis ou réfléchi (20) est détecté, un signal reçu est généré depuis celui-ci et une distance entre objets est mesurée dans une mesure de distance utilisant le temps de vol du faisceau lumineux transmis et reçu (14, 20) dans lequel une distribution en fonction de la distance est formée à partir d'une pluralité des mesures de distance et il est déterminée si ou jusqu'à quelle distance des objets peuvent être détectés de manière fiable, à partir d'une propriété de la distribution par comparaison avec une propriété de référence d'une distribution de référence avec une visibilité suffisante,
**caractérisé en ce qu'**une distribution du nombre des distances mesurées est formée.

Figur 1

Figur 2

Figur 3

## Figur 4

## Figur 5a

## Figur 5b

Figur 6

Figur 7

Starker Niederschlag
Schwacher Niederschlag

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2469296 B1
- DE 4340756 A1
- DE 102009057104 A1
- EP 1302784 A2
- DE 102012112987 B3
- EP 2541273 A1
- DE 19717399 A1
- EP 1085346 A1